# EUROPÄISCHE PATENTSCHRIFT

(11) **EP 1 537 540 B1**
(45) Veröffentlichungstag und Bekanntmachung des Hinweises auf die Patenterteilung: **03.01.2007**
(21) Anmeldenummer: 03794683.7
(22) Anmeldetag: 09.09.2003
(51) Int. Cl.: G07B 15/00

(54) **VERFAHREN ZUR FESTSTELLUNG DES BEFAHRENS ZUMINDEST EINES MAUTPFLICHTIGEN STRASSENABSCHNITTS**
METHOD FOR DETERMINING WHETHER AT LEAST ONE SECTION OF TOLL ROAD IS BEING TRAVELLED UPON
PROCEDE PERMETTANT DE DETERMINER SI AU MOINS UN TRONCON DE ROUTE SOUMIS A PEAGE EST EMPRUNTE

(30) Priorität: 12.09.2002 AT 13742002
(43) Veröffentlichungstag der Anmeldung: 08.06.2005
(73) Patentinhaber: Siemens AG Österreich, 1210 Wien (AT)
(72) Erfinder: HARTINGER, Horst, 8330 Feldbach (AT)
(74) Vertreter: Forsthuber, Martin
(86) Internationale Anmeldenummer: PCT/AT2003/000266
(87) Internationale Veröffentlichungsnummer: WO 2004/025573

(56) Entgegenhaltungen:
- WO-A-98/34199
- US-A- 5 857 152
- US-A- 5 933 114

## Beschreibung

Die Erfindung betrifft ein Verfahren zum Feststellen, ob zumindest ein mautpflichtiger Straßenabschnitt durch ein Fahrzeug befahren wird, wobei mittels zumindest eines Positionsermittlungssystems die Position des Fahrzeuges ermittelt wird, und wobei anhand der ermittelten Position überprüft wird, ob ein befahrener Straßenabschnitt mautpflichtig ist, wobei das Fahrzeug eine Sende/Empfangseinheit aufweist, die dazu eingerichtet ist, mit einem zellular aufgebauten Funknetz Daten auszutauschen, wobei jeder Zelle des Funknetzes zumindest eine Zellenidentifikation zugeordnet ist, und zumindest bei einem teilweisen Ausfall des Positionsermittlungssystems anhand der zumindest einen Zellidentifikation überprüft wird, ob der von dem Fahrzeug benutzte Straßenabschnitt mautpflichtig ist.

Weiters betrifft die Erfindung ein Mautsystem mit zumindest einem Positionsermittlungssystem, welches dazu eingerichtet ist, die Position eines Fahrzeuges zu ermitteln, wobei das Fahrzeug eine Fahrstreckenidentifikationseinheit aufweist, die dazu eingerichtet ist, zumindest anhand der ermittelten Positionen zu überprüfen, ob ein befahrener Straßenabschnitt mautpflichtig ist, wobei die Fahrtstreckenidentifikationseinheit eine Sende/Empfangseinheit aufweist, die dazu eingerichtet ist, mit einem zellular aufgebauten Funknetz Daten auszutauschen, wobei jeder Zelle des Funknetzes zumindest eine Zellenidentifikation zugeordnet ist, wobei die Fahrtstreckenidentifikationseinheit dazu eingerichtet ist, zumindest bei einem teilweisen Ausfall des Positionsermittlungssystems anhand der zumindest einen Zellidentifikation zu überprüfen, ob der von dem Fahrzeug benutzte Straßenabschnitt mautpflichtig ist.

Ein Mautsystem bzw. ein Verfahren der oben genannten Art sind aus der DE 43 44 433 A1 bekannt geworden. Bei dem bekannten Verfahren werden aktuelle Orts-Koordinaten mittels eines GPS-Empfängers erfasst, und mit den in einer elektronischen Vignette intern gespeicherten Einfahrt/Ausfahrt-Koordinaten einer Autobahnstrecke verglichen und bei Übereinstimmung der Koordinaten diese mittels des digitalen mobilen Netzwerkes an ein Fahrzeug externes Abrechnungszentrum übertragen, wobei im Abrechnungszentrum aus den übertragenen Daten die zurückgelegten Autobahnkilometer sowie die damit verbundenen Autobahngebühren berechnet werden.

Die WO 95/20801 offenbart ein Verfahren und eine Anordnung zur Ermittlung von Nutzungsgebühren für Verkehrswege und/oder Verkehrsflächen bei welchem die Positionsdaten des Fahrzeuges mittels eines satellitengestützten Positionsermittlungssystems erfasst werden und mit den Positionen von virtuellen Mautstellen verglichen werden. Die Positionsdaten können zur Berechnung der Mautgebühren an eine fahrzeugexterne Zentralstelle übermittelt werden, wobei auch eine Berechnung der Gebühren in einer Bemautungsvorrichtung des Fahrzeuges erfolgen kann und die ermittelten Gebühren an die Zentralstelle übermittelt werden, wo sie dann von einem Konto abgebucht werden können.

Die WO 99/33027 beschreibt ein Verfahren zur Einhebung von Mautgebühren, bei welchem die aktuelle Position des Fahrzeuges mittels eines satellitengestützten Positionsermittlungssystems bestimmt und zur Berechnung von Mautgebühren mit der Position einer virtuellen Mautstelle verglichen wird, wobei bei Durchfahrt eines Fahrzeuges durch eine physische Mautstation, eine Kommunikationsverbindung zwischen dem Fahrzeug und einer zentralen Mautleitstelle aufgebaut wird, um die angefallenen Mautgebühren zu begleichen. Nach erfolgter Bezahlungstransaktion wird zwischen der Mautstation und dem Fahrzeug eine Kommunikationsverbindung aufgebaut, über die ein Nachweis der ordnungsgemäßen Bezahlung der Mautgebühr übermittelt wird.

Die US 5 933 114 A zeigt ein Mautsystem, welches ein Mobilfunknetz und ein aus Triggerzellen aufgebautes zellulares Funknetz zur Positionsbestimmungssystem aufweist. Eine Triggerzelle wird hierbei durch einen schwachen Sender gebildet, der ein Triggersignal aussendet. Die Frequenzen der Triggerzellen, werden der Mobilstation über GSM mitgeteilt, worauf die Mobilstation diese Frequenzen außerhalb einer Triggerzelle gleichmäßig abtastet. Überschreitet die Feldstärke einer Triggerfrequenz einen vorgegebenen Wert, so versucht die Mobilstation ein Mautsignal der entsprechenden Triggerzelle auszulesen. Empfängt die Mobilstation dieses Signal der Triggerzelle, so löst die Mautstation einen Trigger aus, der zur Abbuchung von Gebühren auf einer Chipkarte führt.

Die WO 96/42179 zeigt ein Verfahren zur Positionsbestimmung eines bewegten GSM-Mobilfunkgerätes. Da die Position des Mobilfunkgerätes nur auf einen Kreis mit ca. 200m Metern Durchmesser angegeben werden kann, wird die momentane Position anhand der Geschwindigkeit und des Straßenverlaufes abgeschätzt.

Ein Nachteil der bekannten Verfahren besteht darin, dass bei einem Ausfall des verwendeten Positionsermittlungssystems, beispielsweise des GPS-Systems, eine Positionsermittlung nicht mehr erfolgen kann. In diesem Fall kann bei den bekannten Mautsystemen eine Bemautung nicht mehr gewährleistet werden.

Es ist daher eine Aufgabe der Erfindung, die oben genannten Nachteile zu überwinden.

Diese Aufgabe wird mit einem Verfahren der eingangs genannten Art erfindungsgemäß dadurch gelöst, dass jede einem mautpflichtigen Straßenabschnitt zugeordnete Zelle mittels eines für die Relevanz dieser Zelle zur Erkennung des mautpflichtigen Straßenabschnittes charakteristischen Gewichtswertes gewichtet wird, wobei zur Identifizierung eines mautpflichtigen Straßenabschnittes die Summe der Gewichtswerte von zumindest zwei diesem Straßenabschnitt zugeordneten Zellen gebildet wird.

Durch die Möglichkeit der Ermittlung, ob ein benutzter Straßenabschnitt mautpflichtig ist, mittels eines Datenaustausches mit einem Funknetz kann auch bei einem Ausfall des primären (z.B. satellitengestützten) Positionsermittlungssystems eine korrekte Bemautung sichergestellt werden. Unter einem primären Positionsermittlungssystem wird in diesem Dokument ein herkömmliches Positionsermittlungssystem verstanden, anhand dessen die Position des Fahrzeuges im Normalbetrieb ermittelt wird.

In einer bevorzugten Variante der Erfindung sind zumindest zwei Zellen des Funknetzes einem mautpflichtigen Straßenabschnitt zugeordnet.

Günstigerweise wird die Zellidentifikation kontinuierlich in der Sende/Empfangseinheit des Fahrzeuges gemessen. Vorteilhafterweise ist das Funknetz ein GSM-Netz, wobei das primäre Positionsermittlungssystem satellitengestützt, beispielsweise ein GPS-System, sein kann.

Bei Überschreiten eines vorgebbaren Schwellwertes für die Summe der Gewichtswerte, kann der aktuell befahrene Straßenabschnitt als mautpflichtig klassifiziert werden.

Günstigerweise entspricht der Gewichtswert einer Zelle höchstens der Anzahl der einem mautpflichtigen Straßenabschnitt maximal zugeordneten Zellen.

Weiters kann die Anzahl der aktuell durchfahrenen, einem mautpflichtigen Abschnitt zugeordneten Zellen anhand der von der Sende/Empfangseinheit empfangenen Zellidentifikationen gezählt werden, wobei überprüft wird, ob eine vorgebbare Anzahl von passierten Zellen überschritten wird.

Darüber hinaus kann überprüft werden, ob zumindest zwei sequentiell hintereinander von der Sende/Empfangseinheit empfangene Zellidentifikationen dem selben mautpflichtigen Straßenabschnitt zugeordnet sind.

Zur Durchführung des erfindungsgemäßen Verfahrens eignet sich insbesondere eine auf Lokalisierung beruhende Applikation, z.B. ein Mautsystem der eingangs genannten Art, bei welchem die Fahrtstreckenidentifikationseinheit dazu eingerichtet ist, jede einem mautpflichtigen Straßenabschnitt zugeordnete Zelle mittels eines für die Relevanz dieser Zelle zur Erkennung des mautpflichtigen Straßenabschnittes charakteristischen Gewichtswertes zu gewichten, wobei die Fahrstreckenidentifikationseinheit dazu eingerichtet ist, zur Identifizierung eines mautpflichtigen Straßenabschnittes die Summe der Gewichtswerte von zumindest zwei diesem Straßenabschnitt zugeordneten Zellen zu bilden.

Bei dem erfindungsgemäßen Mautsystem kann zumindest eine Zelle des Funknetzes einem mautpflichtigen Straßenabschnitt zugeordnet sein, wobei es dazu eingerichtet sein kann, die Zellidentifikation an die Sende/Empfangseinheit des Fahrzeuges zu übermitteln.

Günstigerweise ist das Funknetz ein GSM-Netz.

Weitere Vorteile lassen sich dadurch erzielen, dass das Positionsermittlungssystem satellitengestützt ist, wobei das Positionsermittlungssystem bevorzugterweise ein GPS-System sein kann.

Darüber hinaus kann die Fahrtstreckenidentifikationseinheit dazu eingerichtet sein, bei Überschreiten eines vorgebbaren Schwellwertes für die Summe der Gewichtswerte, den aktuell befahrenen Straßenabschnitt als mautpflichtig zu klassifizieren.

In einer vorteilhaften Variante der Erfindung kann die Fahrtstreckenidentifikationseinheit dazu eingerichtet sein, die Anzahl der aktuell durchfahrenen, einem mautpflichtigen Abschnitt zugeordneten Zellen anhand der von der Sende/Empfangseinheit empfangenen Zellidentifikationen zu zählen und zu überprüfen, ob eine vorgebbare Anzahl von passierten Zellen überschritten wird.

Zur Ermittlung eines mautpflichtigen Straßenabschnittes kann die Fahrtstreckenidentifikationseinheit auch dazu eingerichtet sein, zu überprüfen, ob zumindest zwei hintereinander von der Sende/Empfangseinheit empfangene Zellidentifikationen dem selben mautpflichtigen Straßenabschnitt zugeordnet sind.

Die Erfindung samt weiteren Vorteilen wird im Folgenden anhand einiger nicht einschränkender Ausführungsbeispiele näher erläutert, welche in der Zeichnung dargestellt sind. In dieser zeigen schematisch:
Fig. 1 ein erfindungsgemäßes Mautsystem;
Fig. 2 das Mautsystem aus Fig. 1 im näheren Detail;
Fig. 3 eine Liste mit Georeferenzdaten für die Identifizierung eines mautpflichtigen Straßenabschnittes mittels Zellidentifikationsdaten eines Funknetzes und
Fig. 4 ein Flussdiagramm des erfindungsgemäßen Verfahrens.

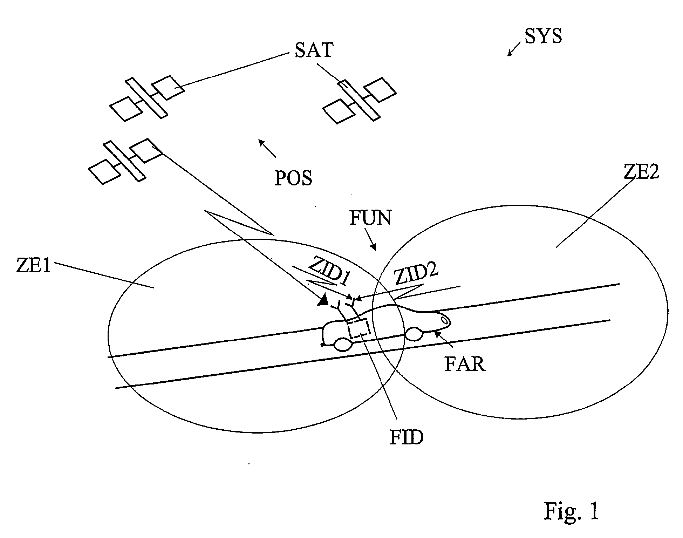

Gemäß Fig. 1 weist ein erfindungsgemäßes Mautsystem SYS ein Positionsermittlungssystem, beispielsweise ein satellitengestütztes System SAT wie das an sich bekannte "Global Positioning System" oder kurz "GPS" System, zur Ermittlung der aktuellen Position eines Fahrzeuges FAR auf. Anhand der von dem Positionsermittlungssystem ermittelten, aktuellen Positionen kann in einer Fahrtstreckenidentifikationseinheit FID überprüft werden, ob der aktuell befahrene Straßenabschnitt mautpflichtig ist. Derartige Vorrichtungen und Verfahren sind an sich bekannt, beispielsweise aus der DE 43 44 433 A1.

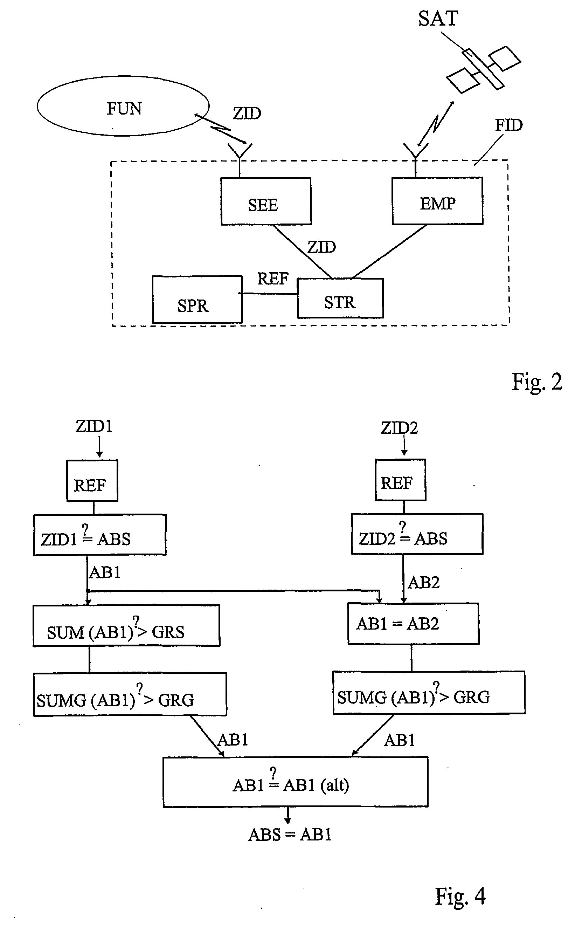

Zusätzlich weist die Fahrtstreckenidentifikationseinheit FID eine Sende/Empfangseinheit SEE auf, mit welcher sie Daten, insbesondere Zellidentifikationen ZID1, ZID2, mit einem aus Zellen ZE1, ZE2 aufgebauten Funknetz FUN, beispielsweise einem an sich bekannten GSM-Netz austauschen kann, sowie einer Empfangseinheit EMP für Daten des Positionsermittlungssystems POS, beispielsweise ein GPS-Modul (Fig. 2). Weiters weist die Fahrtstreckenidentifikationseinheit FID gemäß Fig. 2 eine Steuerung STR auf, die mit der Sende/Empfangseinheit SEE für das Funknetz und der Empfangseinheit EMP für das Positionsermittlungssystem POS in Verbindung steht.

Im Folgenden wird ohne Beschränkung der Allgemeinheit der erfindungsgemäßen Lösung auf das GSM Netz und das GPS-System Bezug genommen.

GSM Sektordaten enthalten üblicherweise keine Positionsinformation bezüglich der Koordinaten eines GSM-Telekommunikationsendgerätes in einem GSM-Netz sondern nur Informationen bezüglich einer GSM-Basisstation, in deren Empfangsbereich sich das GSM-Endgerät aktuell befindet.

Da auch die geographischen Positionen der Basisstationen im Allgemeinen nicht bzw. nicht exakt bekannt sind, kann aus den GSM-Daten direkt weder eine genaue noch eine ungenaue Ortungsinformation gewonnen werden.

Durch die geringe Granularität der GSM-Zellen kann eine aus GSM-Daten berechnete Position nicht mit den Koordinaten von Auffahrten und Autobahnabschnitten verglichen werden, wie es mittels des Positionsermittlungssystems üblicherweise erfolgt.

Eine Ortung mittels GSM-Daten kann aber auf Grundlage a priori definierter Referenzdaten REF erfolgen, die keine Positionsinformation enthalten, sondern eine Zuordnung der GSM-Daten zu mautpflichtigen Straßenabschnitten. Damit die Ortung unabhängig von GSM-Netzbetreibem ist, muss diese Zuordnung entweder durch bereits vorhandene Daten des Netzes oder durch eine Zuordnung der GSM-Daten zu von dem Positionsermittlungssystem gelieferten Daten gemacht weiden.

Für die GSM-Daten gibt es keinen Gültigkeitsindikator. Eine vorhandene GSM-Information kann somit immer als gültig vorausgesetzt werden. Es werden die GSM-Daten an sich als Information herangezogen - wie lange und mit welcher Intensität sie empfangen werden wird nicht berücksichtigt. Da die Ausbreitung der GSM-Zellen üblicherweise relativ groß ist, stellen vereinzelt fehlende Messungen der GSM-Daten keine Probleme dar.

Die GSM-Daten umfassen als wichtigste Daten für die vorliegende Erfindung eine Zellidentifikation ZID, ZID1, ZID2 die "Cell-Id" und den "Location Area Code" jener Zelle ZE1, ZE2 in welche die Sende/Empfangseinheit SEE der Fahrtstreckenidentifikationseinheit FID aktuell eingeloggt ist. Diese Information kann für den Fall, dass die Sende/Empfangseinheit SEE beispielsweise ein Siemens MC35 Modem ist, durch den Befehl AT^MONI abgerufen werden.

Die wichtigsten Parameter sind hierbei die Zellidentifikation ZID und der Local Area Code. Diese Identifikation kann kontinuierlich von der Sende/Empfangseinheit SEE an die Steuerung STR der Fahrtstreckenidentifikationseinheit FID übergeben werden

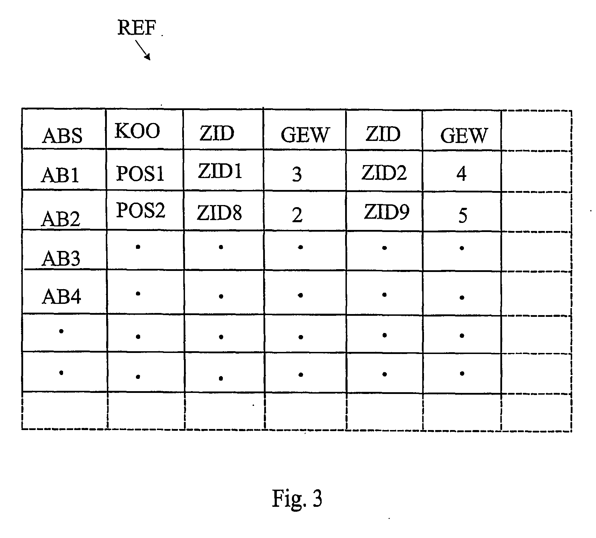

Gemäß Fig. 3 enthalten die Georeferenzdaten REF für die Sekundärortung - im Folgenden wird die erfindungsgemäße Ermittlung anhand der GSM Daten, ob sich das Fahrzeug FAR auf einem mautpflichtigen Straßenabschnitt befindet, als Sekundärortung bezeichnet - jeden Abschnitt ABS, AB1, AB2, AB3, AB4 des mautpflichtigen Straßennetzes. Die Ermittlung mittels des an sich bekannten Positionsermittlungssystems, ob sich das Fahrzeug FAR auf einer mautpflichtigen Strecke befindet, wird im Folgenden als Primärortung bezeichnet.

Für jeden der mautpflichtigen Abschnitte beinhalten die Georeferenzdaten REF der Sekundärortung eine vorgebbare Anzahl an Zellidentifikationen ZID1-ZID9, beispielsweise fünf Zellidentifikationen pro Abschnitt AB1-AB4, ihre dazugehörigen Local Area Codes (LAC's), die Gewichte GEW der Zellidentifikationen ZID1-ZID9 und zusätzlich eine "Tunnelvariable", die einen zu erwartenden Ausfall des primären Ortungssystems aufgrund eines Tunnel anzeigt. Die wesentlichen Informationen, die einen Mautabschnitt repräsentieren, sind somit die ihm zugeordneten Zellidentifikationen ZID, ZID1-ZID8 und ihre Gewichte GEW. Alle Größen in den Georeferenzdaten REF haben keine Einheit.

Die Georeferenzdaten REF können gemäß Fig. 2 durch eine statische und/oder dynamische Liste in einem mit der Steuerung STR verbundenen Speicher SPR der Fahrtstreckenidentifikationseinheit FID abgelegt sein. Die statische Liste enthält, falls vorhanden, die Information des Netzbetreibers über die Zellidentifikationen ZID, die auf einem mautpflichtigen Abschnitt ABS empfangen werden, und ob dieser mautpflichtige Abschnitt bereits mit der Primärortung erkannt wurde. Die statische Liste dient als Rückfalllösung für den Fall, dass ein mautpflichtiger Abschnitt ABS bei einem Ausfall der Primärortung noch nicht befahren wurde. Sobald das Fahrzeuggerät mit der Primärortung eine befahrene Strecke als mautpflichtig oder nicht mautpflichtig klassifiziert, wird neben der statischen Liste eine dynamische Liste angelegt. Diese dynamische Liste der Georeferenzdaten der Sekundärortung enthält während des Benützens von mautpflichtigen Abschnitten ABS empfangene Zellidentifikationen ZID und zusätzlich die gleiche Information wie die statische Georeferenzdatenliste auf nicht befahrenen mautpflichtigen Strecken.

Das Ergebnis der Sekundärortung in Hinblick auf die Identifikation der Benützung eines mautpflichtigen Abschnittes ist signifikant abhängig von der Qualität der Georeferenzdaten REF der Sekundärortung. Im Gegensatz zu den Georeferenzdaten der Primärortung können Veränderungen der Georeferenzdaten REF der Sekundärortung sehr kurzfristig auftreten und nachhaltig die Qualität der Sekundärortung beeinflussen. Daher werden, wenn gültige Daten der Primärortung empfangen werden und ein mautpflichtiger Abschnitt identifiziert wurde, die Georeferenzdaten der Sekundärortung den Resultaten der Primärortung angepasst.

Diese Anpassung der Georeferenzdaten der Sekundärortung durch die Primärortung geschieht sowohl bei Zellidentifikationen, LAC's als auch bei den Gewichten durch:
(i) "Stärkere Gewichtung" von Zellidentifikationen, die bei einer Fahrt auf einer mautpflichtigen Strecke empfangen werden, und
(ii) "Abwertung" von Zellidentifikationen, die bei einer Fahrt auf einer nicht mautpflichtigen Strecke empfangen werden.

Wird eine Auffahrt auf einen mautpflichtigen Straßenabschnitt von der Primärortung eindeutig erkannt, so können bis zum Erkennen der nächsten Auffahrt alle empfangenen Zellidentifikationen und die dazugehörigen LAC's in einem Vektor mitgespeichert werden. Ist bei Erkennen der nächsten Auffahrt inzwischen ein neuer Abschnitt bezahlt worden und das GPS dabei nicht lange ausgefallen, so werden die gespeicherten Zellidentifikationen mit ihren LACs mit den Georeferenzdaten der Sekundärortung nach folgendem Verfahren verglichen:

Für alle Zellidentifikationen, die in dem von der Primärortung anhand empfangener Positionsdaten KOO, POS1, POS2 soeben identifizierten Abschnitt ABS, AB1-AB4 abgespeichert wurden, sucht man den dazugehörigen Abschnitt ABS, AB1-AB4 in den Georeferenzdaten REF der Sekundärortung. Es können drei Fälle eintreten:
(i) Die Zellidentifikation ZID, ZID1-ZID9 ist bereits in den Georeferenzdaten REF enthalten und zwar in genau dem Mautabschnitt ABS, ABS1-ABS2, den die Primärortung anhand der Positionsdaten KOO, POS1, POS2 gerade identifiziert hat,
(ii) die Zellidentifikation ZID, ZID1-ZID9 ist bereits in den Georeferenzdaten REF enthalten, steht allerdings in einem anderen Mautabschnitt ABS, ABS1-ABS2 und
(iii) die Zellidentifikation ZID, ZID1-ZID9 ist noch nicht in den Georeferenzdaten REF enthalten.

Im Fall (i) kann das Gewicht GEW dieser Zellidentifikation ZID, ZID1-ZID9 erhöht (bis maximal zu der Anzahl der einem Mautabschnitt maximal zugeordneten Zellen ZE1, ZE2, beispielsweise fünf) und der dazugehörige LAC eingetragen werden.

Im Fall (ii) werden die Zellidentifikation ZID, ZID1-ZID9 und der LAC in dem von der Primärortung soeben identifizierten Abschnitt ABS, AB1- AB4 in den Georeferenzdaten REF eingetragen und das Gewicht GEW der Zellidentifikation ZID, ZID1-ZID9 mit einem vorgebbaren Minimalwert, beispielsweise 1, initialisiert. In dem Abschnitt in den Georeferenzdaten REF, wo diese Zellidentifikation ZID, ZID1-ZID9 bisher stand, wird sie gelöscht. Ausnahme: Der Abschnitt ABS, AB1- AB4 in den Georeferenzdaten REF, dem diese Zellidentifikation ZID, ZID1-ZID9 bisher zugeordnet war, enthält weniger Zellidentifikationen ZID, ZID1-ZID9 als der von der Primärortung soeben identifizierte Abschnitt ABS, AB1- AB4. In diesem Fall wird die Zellidentifikation ZID, ZID1-ZID9 in diesem Abschnitt in den Georeferenzdaten REF belassen, um nicht zuviel Information zu verlieren (diese Zellidentifikation ZID, ZID1-ZID9 könnte in dem Abschnitt die einzige sein).

Im Fall (iii) wird die Zellidentifikation ZID, ZID1-ZID9 in keinem Abschnitt ABS, AB1- AB4 des mautpflichtigen Straßennetzes in den Georeferenzdaten REF gefunden, d. h. sie ist eine neue Zellidentifikation ZID, ZID1-ZID9. Es werden die Zellidentifikation ZID, ZID1-ZID9 und ihr LAC in dem von der Primärortung soeben identifizierten Abschnitt in den Georeferenzdaten REF eingetragen.

Wenn eine Zellidentifikation ZID, ZID1-ZID9 in die vollständigen Georeferenzdaten REF eines Abschnitts eingetragen wird, geschieht dies vorteilhafterweise statt der Information, wo in diesem Abschnitt eine Zellidentifikation ZID, ZID1-ZID9 mit niedrigstem Gewicht steht.

Weist die Primärortung das Fahrzeug FAR als nicht auf einer mautpflichtigen Strecke befindlich aus, können Zellidentifikationen ZID, ZID1-ZID9, die empfangen wurden und auch in einem Mautabschnitt ABS, AB1- AB4 der Georeferenzdaten zu finden sind, abgewichtet werden. Die Abgewichtung kann beispielsweise so eingestellt werden, dass das Gewicht GEW der Zellidentifikationen ZID, ZID1-ZID9, die auf einem nicht mautpflichtigen Abschnitt ABS, AB1- AB4 empfangen wurden, aber in den Georeferenzdaten REF einem mautpflichtigen Abschnitt ABS, AB1- AB4 zugeordnet sind, um einen vorgebbaren. Wert; beispielsweise zwei vermindert wird. Das Minimalgewicht jeder Zellidentifikation ZID, ZID1-ZID9 kann hierbei durch eine untere Grenze beschränkt sein, diese Grenze kann, wie bereits oben erwähnt, mit dem Wert eins festgelegt werden. Ist z. B. das Gewicht GEW einer Zellidentifikation ZID, ZID1-ZID9 zwei und wird diese Zellidentifikation ZID, ZID1-ZID9 auf einer nicht mautpflichtigen Strasse empfangen, ist das Gewicht GEW dieser Zellidentifikation ZID, ZID1-ZID9 nach der Abgewichtung 1.

Die Fahrtstreckenidentifikation und Aktualisierung der dynamischen Liste kann von der Steuerung STR, beispielsweise einem entsprechend programmierten Mikro- oder Signalprozessor durchgeführt werden. Am Ende jedes Durchlaufs der Fahrtstreckenidentifikation - ein neuer Durchlauf wird gestartet, sobald von der Sende/Empfangseinheit SEE eine neue Zellidentifikation ZID, ZID1-ZID9 empfangen wird - können die gesamten Georeferenzdaten REF für die Sekundärortung in einer Variablen, beispielsweise in einem Array, gespeichert werden. Wird die Fahrtstreckenidentifikation beendet, kann die Information dieser Variablen in die dynamische Liste übertragen werden. Die dynamische Liste kann beispielsweise in Form eines Textfiles im Format ".txt" in dem Speicher SPR der Fahrtstreckenidentifikationseinheit FID abgelegt sein.

Gemäß Fig. 4 kann die erfindungsgemäße Ermittlung eines Mautabschnittes bei Ausfall der Primärortung in zwei Schritten erfolgen:
1. Vergleich der empfangenen Zellidentifikationen ZID, ZID1-ZID9 mit den in den Georeferenzdaten (der dynamischen bzw. statischen Liste) der Sekundärortung vorhandenen Zellidentifikationen ZID, ZID1-ZID9 und
2. Entscheidung, ob ein gefundener Mautabschnitt ABS, AB1- AB4 tatsächlich als befahren ausgegeben werden kann.

Die Entscheidung gemäß oben angeführtem Punkt 2, ob ein befahrener Straßenabschnitt mautpflichtig ist, kann wie folgt durchgeführt werden:
(i) Mehr als eine Mindestanzahl GRS, beispielsweise die Hälfte, der Zellidentifikationen, die in den Georeferenzdaten einem mautpflichtigen Abschnitt ABS, AB1- AB4 zugeordnet sind, wurden empfangen - in Fig. 3 ist mit SUM die Anzahl der in einem Abschnitt ABS, AB1- AB4 empfangenen Zellidentifikationen bezeichnet - wobei die Summe SUMG der Gewichte GEW der einzelnen Zellidentifikationen ZID, ZID1-ZID9 einen vorgebbaren Schwellwert GRG überschreitet, oder
(ii) wenn mindestens zwei aufeinanderfolgende Zellidentifikationen ZID, ZID1-ZID9 dem selben Straßenabschnitt ABS, AB1- AB4 zugeordnet sind und die Summe SUMG der Gewichte GEW der beiden Zellidentifikationen ZID, ZID1-ZID9 einen vorgebbaren Wert überschreiten.

Trifft das Kriterium (i) oder das Kriterium (ii) zu, so kann weiters überprüft werden, ob der identifizierte Abschnitt AB1 schon auf der selben Fahrt identifiziert wurde, ist dies nicht der Fall, so kann der identifizierte Abschnitt AB1 als mautpflichtig klassifiziert werden.

## Patentansprüche

1. Verfahren zum Feststellen, ob zumindest ein mautpflichtiger Straßenabschnitt durch ein Fahrzeug (FAR) befahren wird, wobei mittels zumindest eines Positionsermittlungssystems (POS) die Position des Fahrzeuges (FAR) ermittelt wird, und anhand der ermittelten Position überprüft wird, ob ein befahrener Straßenabschnitt mautpflichtig ist, wobei das Fahrzeug (FAR) eine Sende/Empfangseinheit (SEE) aufweist, die dazu eingerichtet ist, mit einem zellular aufgebauten Funknetz (FUN) Daten (DAT) auszutauschen, wobei jeder Zelle (ZEL) des Funknetzes (FUN) zumindest eine Zellenidentifikation (ZID) zugeordnet ist, und zumindest bei einem teilweisen Ausfall des Positionsermittlungssystems (POS) anhand der zumindest einen Zellidentifikation (ZID) überprüft wird, ob der von dem Fahrzeug (FAR) benutzte Straßenabschnitt mautpflichtig ist, **dadurch gekennzeichnet, dass** jede einem mautpflichtigen Straßenabschnitt zugeordnete Zelle mittels eines für die Relevanz dieser Zelle zur Erkennung des mautpflichtigen Straßenabschnittes charakteristischen Gewichtswertes gewichtet wird, wobei zur Identifizierung eines mautpflichtigen Straßenabschnittes die Summe der Gewichtswerte von zumindest zwei diesem Straßenabschnitt zugeordneten Zellen gebildet wird, wobei bei Überschreiten eines vorgebbaren Schwellwertes für die Summe der Gewichtswerte, der aktuell befahrene Straßenabschnitt als mautpflichtig klassifiziert wird.

2. Verfahren nach Anspruch 1, **dadurch gekennzeichnet, dass** zumindest eine Zelle (ZEL) des Netzes einem mautpflichtigen Straßenabschnitt zugeordnet ist.

3. Verfahren nach Anspruch 1 oder 2, **dadurch gekennzeichnet, dass** die Zellidentifikation an die Sende/Empfangseinheit (SEE) des Fahrzeuges (FAR) übermittelt wird.

4. Verfahren nach einem der Ansprüche 1 bis 3, **dadurch gekennzeichnet, dass** das Funknetz ein GSM-Netz ist.

5. Verfahren nach einem der Ansprüche 1 bis 4, **dadurch gekennzeichnet, dass** das Positionsermittlungssystem satellitengestützt ist.

6. Verfahren nach Anspruch 5, **dadurch gekennzeichnet, dass** das Positionsermittlungssystem ein GPS-System ist.

7. Verfahren nach einem der Ansprüche 1 bis 6, **dadurch gekennzeichnet, dass** der Gewichtswert einer Zelle höchstens der Anzahl der einem mautpflichtigen Straßenabschnitt maximal zugeordneten Zellen entspricht.

8. Verfahren nach einem der Ansprüche 1 bis 7, **dadurch gekennzeichnet, dass** die Anzahl der aktuell durchfahrenen, einem mautpflichtigen Abschnitt zugeordneten Zellen anhand der von der Sende/Empfangseinheit (SEE) empfangenen Zellidentifikationen gezählt wird, wobei überprüft wird, ob eine vorgebbare Anzahl von passierten Zellen überschritten wird.

9. Verfahren nach einem der Ansprüche 1 bis 8, **dadurch gekennzeichnet, dass** überprüft wird, ob zumindest zwei hintereinander von der Sende/Empfangseinheit empfangene Zellidentifikationen dem selben mautpflichtigen Straßenabschnitt zugeordnet sind.

10. Mautsystem (SYS) mit zumindest einem Positionsermittlungssystem (POS), welches dazu eingerichtet ist, die Position eines Fahrzeuges (FAR) zu ermitteln, wobei das Fahrzeug (FAR) eine Fahrstreckenidentifikationseinheit (FID) aufweist, die dazu eingerichtet ist, zumindest anhand der ermittelten Positionen zu überprüfen, ob ein befahrener Straßenabschnitt mautpflichtig ist, wobei die Fahrtstreckenidentifikationseinheit (FID) eine Sende/Empfangseinheit (SEE) aufweist, die dazu eingerichtet ist, mit einem zellular aufgebauten Funknetz (FUN) Daten (DAT) auszutauschen, wobei jeder Zelle (ZEL) des Funknetzes (FUN) zumindest eine Zellenidentifikation (ZID) zugeordnet ist, wobei die Fahrtstreckenidentifikationseinheit (FID) dazu eingerichtet ist, zumindest bei einem teilweisen Ausfall des Positionsermittlungssystems (POS) anhand der zumindest einen Zellidentifikation (ZID) zu überprüfen, ob der von dem Fahrzeug (FAR) benutzte Straßenabschnitt mautpflichtig ist, **dadurch gekennzeichnet, dass** die Fahrtstreckenidentifikationseinheit (FID) dazu eingerichtet ist, jede einem mautpflichtigen Straßenabschnitt zugeordnete Zelle mittels eines für die Relevanz dieser Zelle zur Erkennung des mautpflichtigen Straßenabschnittes charakteristischen Gewichtswertes zu gewichten, wobei die Fahrstreckenidentifikationseinheit (FID) dazu eingereichtet ist, zur Identifizierung eines mautpflichtigen Straßenabschnittes die Summe der Gewichtswerte von zumindest zwei diesem Straßenabschnitt zugeordneten Zellen zu bilden, wobei die Fahrtstreckenidentifikationseinheit (FID) dazu eingerichtet ist, bei Überschreiten eines vorgebbaren Schwellwertes für die Summe der Gewichtswerte, den aktuell befahrenen Straßenabschnitt als mautpflichtig zu klassifizieren.

11. Mautsystem nach Anspruch 10, **dadurch gekennzeichnet, dass** zumindest eine Zelle (ZEL) des Funknetzes (FUN) einem mautpflichtigen Straßenabschnitt zugeordnet ist.

12. Mautsystem nach Anspruch 10 oder 11, **dadurch gekennzeichnet, dass** es dazu eingerichtet ist, die Zellidentifikation an die Sende/Empfangseinheit (SEE) des Fahrzeuges (FAR) zu übermitteln.

13. Mautsystem nach einem der Ansprüche 10 bis 12, **dadurch gekennzeichnet, dass** das Funknetz ein GSM-Netz ist.

14. Mautsystem nach einem der Ansprüche 10 bis 13, **dadurch gekennzeichnet, dass** das Positionsermittlungssystem (POS) satellitengestützt ist.

15. Mautsystem nach einem der Ansprüche 10 bis 14, **dadurch gekennzeichnet, dass** das Positionsermittlungssystem ein GPS-System ist.

16. Mautsystem nach einem der Ansprüche 10 bis 15, **dadurch gekennzeichnet, dass** die Fahrtstreckenidentifikationseinheit (FID) dazu eingerichtet ist, die Anzahl der aktuell durchfahrenen, einem mautpflichtigen Abschnitt zugeordneten Zellen anhand der von der Sende/Empfangseinheit (SEE) empfangenen Zellidentifikationen zu zählen und zu überprüfen, ob eine vorgebbare Anzahl von passierten Zellen überschritten wird.

17. Mautsystem nach einem der Ansprüche 10 bis 16, **dadurch gekennzeichnet, dass** die Fahrtstreckenidentifikationseinheit dazu eingerichtet ist, zu überprüfen, ob zumindest zwei hintereinander von der Sende/Empfangseinheit empfangene Zellidentifikationen dem selben mautpflichtigen Straßenabschnitt zugeordnet sind.

## Claims

1. A method of detecting whether at least one toll road section is being used by a vehicle (FAR), wherein the position of said vehicle (FAR) is determined by means of at least one position detection system (POS) and the determined position is implemented to ascertain whether the road section being used is a toll road section, and wherein said vehicle (FAR) has a transceiver unit (SEE) that is adapted to exchange data (DAT) with a cellular radio network (FUN), and to each cell (ZEL) of said radio network (FUN) at least one cell identifier (ZID) is assigned, and when there is at least partial failure of the position determining system (POS) said at least one cell ID (ZID) is implemented to ascertain whether the road section being used by said vehicle (FAR) is a toll road section, **characterized in that** each cell assigned to a toll road section is weighted by a weight characteristic of the relevance of said cell for recognition of said toll road section, and for identification of a toll road section the sum of the weights of at least two cells assigned to this road section is formed, and when a predefined threshold value of the sum of said weights is exceeded, the currently used road section is classified as being a toll road section.

2. A method as defined in claim 1, **characterized in that** at least one cell (ZEL) of said network is assigned to a toll road section.

3. A method as defined in claim 1 or claim 2, **characterized in that** said cell ID is transmitted to said transceiver unit (SEE) of said vehicle (FAR).

4. A method as defined in any one of claims 1 to 3, **characterized in that** said radio network is a GSM network.

5. A method as defined in any one of claims 1 to 4, **characterized in that** said position detection system is satellite-aided.

6. A method as defined in claim 5, **characterized in that** said position detection system is a GPS system.

7. A method as defined in any one of claims 1 to 6, **characterized in that** the weight of a cell is equal to not more than the maximum number of cells assigned to said toll road section.

8. A method as defined in any one of claims 1 to 7, **characterized in that** the number of currently traversed cells assigned to a toll road section is counted with reference to the cell IDs received by the transceiver unit (SEE), and the count is checked to ascertain whether a predefined number of traversed cells has been exceeded.

9. A method as defined in any one of claims 1 to 8, **characterized in that** a check is carried out to ascertain whether at least two cell IDs successively received by said transceiver unit are assigned to the same toll road section.

10. A toll-collecting system (SYS) comprising at least one position detection system (POS) that is adapted to ascertain the position of a vehicle (FAR), which vehicle (FAR) has a road section identifying unit (FID) that is adapted to check, with reference to at least said detected positions, whether the road section being used is a toll road section, wherein said road section identifying unit (FID) has a transceiver unit (SEE) that is adapted to exchange data (DAT) with a cellular radio network (FUN), and to each cell (ZEL) of said radio network (FUN) at least one cell identifier (ZID) is assigned, and said road section identifying unit (FID) is adapted to check, when there is at least partial failure of said position detection system (POS), whether the road section being used by said vehicle (FAR) is a toll road section, implementing at least one cell ID (ZID) for this purpose, **characterized in that** said road section identifying unit (FID) is adapted to weight each cell assigned to a toll road section by a weight characteristic of the relevance of said cell for recognition of said toll road section and the road section identifying unit (FID) is adapted, for identification of a toll road section, to form the sum of the weights of at least two cells assigned to this road section, and the road section identifying unit (FID) is adapted to classify the currently used road section as being a toll road section when a predefined threshold value of the sum of said weights is exceeded.

11. A toll-collecting system as defined in claim 10, **characterized in that** at least one cell (ZEL) of said radio network (FUN) is assigned to a toll road section.

12. A toll-collecting system as defined in claim 10 or claim 11, **characterized in that** it is adapted to transmit said cell ID to said transceiver unit (SEE) of said vehicle (FAR).

13. A toll-collecting system as defined in any one of claims 10 to 12, **characterized in that** said radio network is a GSM network.

14. A toll-collecting system as defined in any one of claims 10 to 13, **characterized in that** said position detection system (POS) is satellite-aided.

15. A toll-collecting system as defined in any one of claims 10 to 14, **characterized in that** said position detection system is a GPS system.

16. A toll-collecting system as defined in any one of claims 10 to 15, **characterized in that**, the road section identifying unit (FID) is adapted to count the number of currently traversed cells assigned to a toll road section with reference to the cell IDs received by the transceiver unit and to check the count to ascertain whether a predefined number of traversed cells has been exceeded..

17. A toll-collecting system as defined in any one of claims 10 to 16, **characterized in that** said road section identifying unit is adapted to check whether at least two successive cell IDs received by the transceiver unit are assigned to the same toll road section.

## Revendications

1. Procédé pour déterminer si au moins un tronçon de route à péage est parcouru par un véhicule (FAR), dans lequel la position du véhicule (FAR) est déterminée au moyen d'au moins un système de détermination de position (POS) et dans lequel, sur la base de la position déterminée, on vérifie si un tronçon de route parcouru est à péage, le véhicule (FAR) présentant une unité d'émission/réception (SEE) qui est agencée pour échanger des données (DAT) avec un réseau radio (FUN) de construction cellulaire, au moins une identification de cellule (ZID) étant associée à chaque cellule (ZEL) du réseau radio (FUN), et au moins en cas de défaillance partielle du système de détermination de position (POS), on vérifie à l'aide de l'au moins une identification de cellule (ZID), si le tronçon de route utilisé par le véhicule (FAR) est à péage, **caractérisé en ce que** chaque cellule associée à un tronçon de route à péage est pondérée avec une valeur de poids caractéristique pour la pertinence de cette cellule pour la reconnaissance du tronçon de route à péage, cependant que, pour l'identification d'un tronçon de route à péage, on forme la somme des valeurs de poids d'au moins deux cellules associées à ce tronçon de route, le tronçon de route actuellement parcouru étant classé comme à péage en cas de dépassement d'une valeur de seuil pouvant être prédéterminée pour la somme des valeurs de poids.

2. Procédé selon la revendication 1, **caractérisé en ce qu'**au moins une cellule (ZEL) du réseau est associée à un tronçon de route à péage.

3. Procédé selon la revendication 1 ou 2, **caractérisé en ce que** l'identification de cellule est transmise à l'unité d'émission/réception (SEE) du véhicule (FAR).

4. Procédé selon une des revendications 1 à 3, **caractérisé en ce que** le réseau radio est un réseau GSM.

5. Procédé selon une ou des revendications 1 à 4, **caractérisé en ce que** le système de détermination de position est assisté par satellite.

6. Procédé selon la revendication 5, **caractérisé en ce que** le système de détermination de position est un système GPS.

7. Procédé selon une des revendications 1 à 6, **caractérisé en ce que** la valeur de poids d'une cellule est au maximum le nombre des cellules qui peuvent être associées au maximum à un tronçon de route à péage.

8. Procédé selon une des revendications 1 à 7, **caractérisé en ce que** le nombre des cellules actuellement parcourues, qui sont associées à un tronçon à péage, est compté à l'aide des identifications de cellules reçues par l'unité d'émission/réception (SEE) en même temps qu'on vérifie si un nombre pouvant être prédéterminé de cellules traversées est dépassé.

9. Procédé selon une des revendications 1 à 8, **caractérisé en ce qu'**on vérifie si au moins deux identifications de cellules reçues l'une après l'autre par l'unité d'émission/réception sont associées au même tronçon de route à péage.

10. Système de péage (SYS) possédant au moins un système de détermination de position (POS) qui est agencé pour déterminer la position d'un véhicule (FAR), le véhicule (FAR) présentant une unité d'identification de trajet (FID) qui est elle-même agencée pour vérifier, au moins à l'aide des positions déterminées, si un tronçon de route parcouru est à péage, l'unité d'identification de trajet (FID) présentant une unité d'émission/réception (SEE) qui est agencée pour échanger des données (DAT) avec un réseau radio (FUN) de construction cellulaire, dans lequel, à chaque cellule (ZEL) du réseau radio, est associée au moins une identification de cellule (ZID), l'unité d'identification de parcours (FID) étant agencée pour vérifier, au moins dans le cas d'une défaillance partielle du système de détermination de position (POS), à l'aide de l'au moins une identification de cellule (ZID), si le tronçon de route utilisé par le véhicule (FAR) est à péage, **caractérisé en ce que** l'unité d'identification de trajet (FID) est agencée de manière à pondérer chaque cellule associée à un tronçon de route à péage, au moyen d'une valeur de poids caractéristique pour la pertinence de cette cellule pour la reconnaissance du tronçon de route à péage, l'unité d'identification de trajet (FID) étant agencée, pour l'identification d'un tronçon de route à péage, pour former la somme des valeurs de poids d'au moins deux cellules associées à ce tronçon de route, l'unité d'identification de trajet (FID) étant agencée pour classer le tronçon de route actuellement parcouru comme à péage lorsqu'une valeur de seuil pouvant être prédéterminée pour la somme des valeurs de poids est dépassée.

11. Système de péage selon la revendication 10, **caractérisé en ce qu'**au moins une cellule (ZEL) du réseau radio (FUN) est associée à un tronçon de route à péage.

12. Système de péage selon la revendication 10 ou 11, **caractérisé en ce qu'**il est agencé pour transmettre l'identification de cellule à l'unité d'émission/réception (SEE) du véhicule (FAR).

13. Système de péage selon une des revendications 10 à 12, **caractérisé en ce que** le réseau radio est un réseau GSM.

14. Système de péage selon une des revendications 10 à 13, **caractérisé en ce que** le système de détermination de position (PES) est assisté par satellite.

15. Système de péage selon une des revendications 10 à 14, **caractérisé en ce que** le système de détermination de position est un système GPS.

16. Système de péage selon une des revendications 10 à 15, **caractérisé en ce que** l'unité d'identification de trajet (FID) est agencée pour compter le nombre des cellules actuellement parcourues, qui sont associées à un tronçon à péage, sur la base des identifications de cellules reçues par l'unité d'émission/réception (SEE) et pour vérifier si un nombre pouvant être prédéterminé de cellules traversées est dépassé.

17. Système de péage selon une des revendications 10 à 16, **caractérisé en ce que** l'unité d'identification de trajet est agencée pour vérifier si au moins deux identifications de cellules reçues l'une derrière l'autre par l'unité d'entraînement sont associées au même tronçon de route à péage.
